(19) Europäisches Patentamt
European Patent Office
Office européen des brevets

(11) EP 4 550 489 A1

(12) EUROPEAN PATENT APPLICATION

(43) Date of publication:
**07.05.2025 Bulletin 2025/19**

(21) Application number: **23383106.4**

(22) Date of filing: **30.10.2023**

(51) International Patent Classification (IPC):
***H01M 8/16*** *(2006.01)* ***H01M 8/2475*** *(2016.01)*
***H01M 4/90*** *(2006.01)*

(52) Cooperative Patent Classification (CPC):
**H01M 8/16; H01M 4/90; H01M 8/2475**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Acondicionamiento Tarrasense**
**08225 Terrassa (Barcelona) (ES)**

(72) Inventors:
- **Bosch Jiménez, Pau**
  **Terrassa (Barcelona) (ES)**
- **Luque Rueda, Jorge**
  **Terrassa (Barcelona) (ES)**
- **Gaudes Sáez, Ainhoa**
  **Terrassa (Barcelona) (ES)**
- **López Martí, Pau**
  **Terrassa (Barcelona) (ES)**
- **Molognoni, Daniele**
  **Terrassa (Barcelona) (ES)**
- **Borras Camps, Eduard**
  **Terrassa (Barcelona) (ES)**
- **Faccini, Mirko**
  **08009 BARCELONA (ES)**

(74) Representative: **Pons**
**Glorieta Rubén Darío 4**
**28010 Madrid (ES)**

(54) **GREEN CONTAINER FUEL CELL MODULE EMPLOYING BIOELECTROCHEMICAL SYSTEM**

(57) It is disclosed a green container microbial fuel cell (100) which integrates an electrochemical system, in particular a microbial fuel cell module (3), suitable to be installed in surfaces of infrastructures such as building roofs and walls, in which plants can grow to absorb water and provide thermal isolation and capable of producing electricity by oxidizing organic matter dissolved in water. It comprises a vessel (13) and the microbial fuel cell module (1) attached to the bottom of the vessel (13). This module (1) houses a microbial fuel cell (3) that has a planar configuration and comprises an anode (4) inoculated with electroactive microorganisms in contact with water containing organic matter, such as polluted water, an ionic exchange membrane (5) and an air cathode (6) in contact with ambient air. A vessel (13) with a closed side panel (14) holds substrate (15) in place, where plants can grow.

EP 4 550 489 A1

## Description

### OBJECT OF THE INVENTION

The present invention relates to the field of renewable electricity generation and polluted water treatment.

The invention relates to a device that comprises a bioelectrochemical system, in particular a microbial fuel cell (MFC) which is coupled to a green structure, suitable to be installed in surfaces of infrastructures such as building roofs and walls, creating a green roof or a green wall, and as planters for private and street furniture. It is capable of generating electricity by oxidizing water pollutants thanks to the microorganisms present in the MFC and suspended in the water in contact with the anode.

### BACKGROUND ART

As the energy transition moves forward towards decarbonisation, one of the key players is the building sector. Many homes are deficient energy efficiency-wise as they were built decades ago before thermal regulations. To improve their efficiency in a life-cycle-based sustainable approach, the green wall and green roof concepts have been proposed, where plants are used to better isolate buildings, mitigate urban heat-island effects, improve air quality and absorb rainwater or even treat polluted water.

An important aspect of the energy transition is finding ways of clean power generation, taking advantages of synergies between systems and processes. It is known that oxidation reactions of organic matter take place in the green roof/green wall ecosystems by the microorganisms. These oxidation reactions can be used in anodes of fuel cells, providing electricity by breaking down matter, which is a well-studied phenomenon.

Taking into account the enormous surface area of roofs and walls, there is a great potential to be tapped into by combining fuel cells and green roofs, and, in particular, fuel cells which profit from synergies with microorganisms living in them that oxidize pollutants, which are known as microbial fuel cells. Nevertheless, there seems to be no commercial systems which integrate fuel cells and green roofs for electricity generation and water treatment and are easy to install in new buildings and convenient to upgrade old buildings, where the fuel cells are hidden inside the green roof to prevent easy tampering with and theft thereof.

### DESCRIPTION OF THE INVENTION

It is disclosed an invention which aims to provide a fuel cell module that is readily scalable and can function synergistically coupled with a green roof and green wall system. In particular, the object of the invention is a green container fuel cell module that integrates a microbial fuel cell (MFC) module, shortened hereinafter to green container fuel cell module.

The green container fuel cell module comprises a vessel and a microbial fuel cell module.

The vessel comprises a closed side panel that holds substrate in place, water, whether it is polluted or not, and plants that grow on the substrate. The side panel comprises a bottom contour.

The microbial fuel cell module comprises:

- a plate,
- a housing,
- at least one planar microbial fuel cell.

The planar microbial fuel cell comprises an anode, an ionic exchange membrane and an air-cathode stacked in this order. The planar microbial fuel cell is fixed in the opening, fully covering the opening. The anode and the air-cathode are electrically connected to a circuit to harvest the electricity generated by the microbial fuel cell.

The anode and air-cathode electrodes are resistant to corrosion and porous. In an embodiment, the electrodes are carbon-based materials due to their conductivity and stability, such as those made from carbon fibers like carbon cloth, carbon paper, carbon textiles and carbon foam, and those made of carbon plate. The carbon fibers have a diameter that can range from 100 nm to 10 micrometers and may be arranged in one or several directions.

In another embodiment, the electrodes are metallic materials, which offer a high conductivity at a low cost, such as nickel mesh, nickel foam and stainless-steel mesh.

In another embodiment, the electrodes are non-conductive materials, the surface of which should be covered with a conductive layer as current collector, such as graphite paint.

The anode is previously inoculated with electroactive microorganisms, forming a biofilm on its surface and able to exchange electrons with a solid electrode. The microorganisms oxidize organic matter and transfer electrons to the anode.

The air-cathode is in contact with ambient air. The air-cathode needs $O_2$, which is the final acceptor of electrons

coming from anode and allows electron flow.

The semi-reactions that may happen in the microbial fuel cell are, qualitatively:

- In the anode:

$$organic\ matter + H_2O \rightarrow HCO_3^- + H^+ + e^-$$

- In the air-cathode:

$$O_2 + H^+ + e^- \rightarrow H_2O$$

Nevertheless, there are other possible reaction pathways in the microbial fuel cell.
The oxygen reduction to water is a process with low kinetic due to the high activation energy required to break the double covalent bonding of the $O_2$ molecule. Therefore, the reaction must be catalyzed.

The air-cathode may contain metal catalysts (such as Pt, Fe, Ni, Co, Mn), metal oxides, metal phosphides and carbon-based catalysts as oxygen evolution reaction catalysts. Precious metal catalysts show a high performance in air-cathodes, but they are expensive. In contrast, non-precious metal catalysts are low cost and perform well in air-cathodes. Carbon-based catalysts may be manufactured from carbon doped with nitrogen or one material from the group of iron, cobalt, nickel, platinum and palladium.

The air-cathode is loaded with one of the above catalysts. If Pt is used, for low power density applications, a low loading is sufficient in the range from 0.01 to 0.5 mg/cm$^2$, such as 0.2 mg/cm$^2$ of Pt on the air-cathode.

The air-cathode may be loaded by spreading an ink formulation composed of a solvent, a binder and a catalyst. In an embodiment, the binder is Nafion ®, Aquivion ® or other similar polymer, which requires that the solvent solubilize the binder, like be water and isopropanol. This is advantageous in terms of scalability and industrial applicability. Other binders can be used, such PFTE and PVDF which respectively need ethanol and N, N-dimethylacetamide as solvents, but Nafion ® is the preferred one because of its better air-cathode performance and low-toxicity binder.

As for the ionic exchange membrane, it allows the exchange of anions or cations between the air-cathode and the anode. The highest performance membrane for microbial fuel cells is made of Nafion ®, which is used in an embodiment.

Regarding the layout of the microbial fuel cell module, the housing supports the plate. The housing comprises a continuous side wall forming a closed perimeter with an upper and a lower rim, and a base. The side wall is provided with at least two vents through which air can flow in and out the housing to feed the air-cathode. The plate is provided with an opening in which the microbial fuel cell is attached, the air-cathode facing towards the base in contact with air and the anode facing up. The plate is attached to the side walls above the base with a clearance such that a channel is formed between the base, the side wall and the plate. Substrate is in direct contact with the plate and the anode.

In a further embodiment, an additional pervious roof is provided attached to the side wall above the plate, the plate, the pervious roof and the side wall forming a water chamber. Substrate is supported by the pervious roof, and water filters through to the water chamber, flooding the anode and enabling the chemical reaction.

To drain out the water that accumulates in the water chamber, allowing a continuous flow so that the microbial fuel cell can efficiently operate, a pipe connects the water chamber and the outside. In turn, for instance, the pipe may be attached to a water collection system.

The bottom contour of the vessel is coupled to the upper rim of the side wall of the housing in a watertight manner.

Next, an anode inoculation method is described in order to provide a working anode for the microbial fuel cell. The method uses an inoculum rich in electroactive microorganisms as a source of microorganisms and acetate medium. Acetate medium is a solution of sodium acetate in PBS (phosphate-buffered saline). Wastewater from a wastewater treatment plant can be used instead of acetate medium.

The method comprises the steps of:

- Feeding inoculum to the anode periodically.
- Feeding acetate medium to the anode periodically.

A voltage between 0.1 and 0.5 V, and in particular of 0.2 V is applied while simultaneously performing the above steps until the current output reaches a constant value.

In order to better understand the invention, it is now described its operation.

First, one or more microbial green container fuel cell modules are laid on a surface to be fitted, for instance, a rooftop. The modules may be laid adjacent to each other so as to fully or partially cover some surface area. The pipe of each

green container fuel cell module is connected to a water collection system. The electrodes of the microbial fuel cells modules are electrically connected in series or in parallel depending on the requirements.

Next, substrate is poured in the green container fuel cell modules, where plants are grown. Plants improve the thermal isolation of the fitted surface, absorbing rainwater as well before it reaches the structure of the building.

The microbial fuel cell module can only satisfactorily operate, that is, generate a significant amount of electrical power in the range of some mA to A per square meter, if it is periodically fed with water rich in organic matter. Therefore, the best performance is achieved if polluted water is used, which plants and microorganisms break down cleaning it and contributing to polluted water management.

## DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

Figure 1.- Shows a front view of an embodiment of the green container fuel cell module.

Figure 2.-Shows a cutaway view of the embodiment of the green container fuel cell module.

Figure 3.- Shows a cutaway view of the embodiment of the microbial fuel cell.

Figure 4.- Shows a perspective view of the microbial fuel cell module.

Figure 5.- Shows the current density generated by the green container fuel cell module integrating two tested MFC according to the invention with various water types with respect to time.

Figure 6.- Shows the chemical oxygen demand before and after the water types were treated with the green container fuel cell module integrating two tested MFC according to the invention.

## PREFERRED EMBODIMENT OF THE INVENTION

Next, with reference to figures 1 to 4, a preferred embodiment of the green container fuel cell module and an anode inoculation method are disclosed.

The green container fuel cell module (100) comprises a vessel (13) and a microbial fuel cell module (1).

The vessel (13) comprises a closed side panel (14) that holds substrate (15) in place, water, whether it is polluted or not, and plants that grow on the substrate. The side panel (14) comprises a bottom contour (16).

The microbial fuel cell module (1) comprises:

- a plate (2) with an opening,
- one planar microbial fuel cell (3) attached to the opening, comprising a stack of

  a flat anode (4) which is covered by a biofilm formed by electroactive microorganisms and is in contact with water,
  a flat ionic exchange membrane (5) placed below the anode (4) and,
  a flat air-cathode (6) placed below the ionic exchange membrane (5) in contact with air,

- a housing (7), comprising

  a closed side wall (8) having a bottom rim (17) and an upper rim (18),
  a base (9) attached to the bottom rim (17) of the side wall (8), and
  a pipe (12),
  a pervious roof (19) attached to the side wall (8) above the plate (2).

The plate, the pervious roof (19) and the side wall form a water chamber (20). Substrate is supported by the pervious roof (19), and water filters through to the water chamber (20), where it reaches the anode (4), that is, the anode (4) is in contact with the water chamber (20).

The plate (2) is fixed to the side wall (8) above the base forming an air chamber (10) between the plate (2), the side

wall (8) and the base (9).

The air-cathode (6) is arranged in contact with the air chamber (10).

The inoculated anode (4) and air-cathode (6) are carbon-based materials, in particular a carbon cloth, and are covered in a stainless-steel mesh that increases the electrical conductivity of the inoculated anode (4) and of the air-cathode (6).

The side wall (8) is provided with two vents (11) for air flow in and out the air chamber (10).

The pipe (12) piercing through a portion of the side wall (8) above the plate (2) and fluidly connecting the housing (7) with the outside.

The bottom contour (16) is coupled to the upper rim (18) of the side wall (8) of the housing (7) in a watertight manner.

The anode (4) and the air-cathode (6) are made of unidirectional carbon fibers with diameters from 100 nm to 10 micrometers. The air-cathode (6) is based on carbon fiber textiles sprayed with an ink formulation comprising water, isopropanol, Nafion ® and a nitrogen doped carbon particles catalyst. The ionic exchange membrane (5) is made of Nafion ®.

To inoculate the anode (4), an acetate medium comprising 0.5 to 4 g/L of sodium acetate, 20 to 100 mM phosphate buffer and vitamines and nutrients is used as inoculation medium.

The anode (4) inoculation method comprises:

- Once per week, an effluent of a well operated microbial fuel cell is added onto the anode (4).
- Everyday, a volume of fresh acetate medium is added onto the anode (4).

A voltage of 0.2 V is applied between the air-cathode and the anode (4) for 30 days.

Some tests are disclosed below to illustrate the advantages of the preferred embodiment of the invention.

The tests, which are described below, were carried out using two actual microbial fuel cells. Both microbial fuel cells were built with unidirectional carbon fibers for the anode (4) and the ionic exchange membrane (5). As for the air-cathode (6):

- Microbial fuel cell 1 (MFC1) was built using 0.2 mg/cm$^2$ 20% platinum on Vulcan - carbon cloth electrode.
- Microbial fuel cell 2 (MFC2) was built using an ink made of 50 mg of nitrogen doped carbon dispersed in 1.5 mL of Nafion ® 117 solution (5% concentration in water and lower aliphatic alcohols) and 0.1 to 1 mL of isopropanol, the ink was spread on carbon cloth electrode.

Table 1 below shows the components of the synthetic grey water that was prepared:

Table 1. Synthetic grey water composition.

| ***Product*** | ***Quantity*** | ***Units*** |
|---|---|---|
| Bath gel | 220 | mL |
| Body lotion | 90 | mL |
| Toothpaste | 30 | 9 |
| Shampoo | 210 | mL |
| Hair Conditioner | 230 | mL |
| Hand soap | 260 | mL |

The mixture of the above ingredients was used diluted with distilled water at a concentration of 1% vol. This synthetic greywater has 370 ppm of COD (chemical oxygen demand), pH of 8.8 and conductivity of 0.04 mS/cm.

Table 2 shows some properties of the tested water types. GW stands for grey water. COD in is the COD when water was fed to the MFC, and COD out is the COD at the end of the time period.

The removal rate is defined as:

$$removal\ rate\ (\%) = \frac{COD_{in} - COD_{out}}{COD_{in}} \cdot 100$$

Table 2. Properties of the tested water types.

| *Water type* | *pH* | *Cond. (mS/cm)* | *COD in (mg/L)* | *COD out (mg/L)* | *removal rate (%)* |
|---|---|---|---|---|---|
| 100% acetate (200) | 8.2 | 10.9 | 1628 | 300 | 82% |
| 10% syn. GW + 90% acetate (201) | 7.6 | 9.3 | 1585 | 447 | 72% |
| 50% syn. GW + 50% acetate (202) | 8.0 | 5.6 | 959 | 477 | 50% |
| 100% syn. GW (203) | 8.8 | 0.04 | 371 | 106 | 71% |
| 100% syn. GW + 2.5 g/L acetate (204) | 8.3 | 3.8 | 1886 | 1978 | -5% |
| 100% acetate (2nd time) (205) | 8.2 | 10.9 | 1628 | 922 | 43% |
| 50% real GW (206) | 7.6 | 5.9 | 1214 | 638 | 47% |
| 100% real GW (207) | 7.4 | 1.4 | 771 | 365 | 53% |

Figure 5 shows the electrical current densities of MFC1 (400) and MFC2 (500) for all the tested water types, where the current densities lie in the range from 10 to 2000 $mA/m^2$. The performance of MFC is high when they are fed with 100% acetate medium (200, 205) and the current output decrease with mixtures of real grey water are introduced. The reduction in the electrochemical performance of the MFCs is because the real grey water has low organic matter concentration (COD of 700 ppm) and a low conductivity of 1.5 mS/cm.

In figure 4, for each pair of bars, the sparse striped bar refers to COD in (when water was fed to the MFCs) and the thick striped bar refers to COD out (at the end of the period). The dots indicate the removal rate. Figure 4 refers to the joint performance of both tested MFC (400, 500).

Figures 5 and 6 illustrate a clear relationship between electricity output and COD inlet concentration. There is one exception, which is in the period working with 100 % GW + 2.5 g/L of acetate, where the inlet COD is high (1800 ppm) and the current generation is very low. The reason is because the system was previously operated with 100 % grey water and the anodic biofilm lose the performance due low COD concentration, low conductivity and present of the toxic compounds in the synthetic grey water.

The platinum-based air-cathode (MFC2) performs better with a higher current density than the MFC1.

The system can degrade between 45% and 82% of organic matter contained in the different types of water (working with this particular hydraulic retention times). As it is explained above, more than 50 % of organic matter is remove when the system is fed with 100 % of synthetic or real grey water. These results are good; however, it must be pointed out that the concentration of organic matter in the grey water is very low (370 and 770 ppm, respectively) and this low concentration allows to achieve more than 50% of removal rate. In case of 100 % GW + 2.5 g/L of acetate, the removal rate is very low due the lack of active biomass in the system, which was produced because the toxicity of synthetic grey water used to operate the system.

## Claims

**1.** A green container microbial fuel cell module (100), comprising:

- a vessel (13) comprising a closed side panel (14) that holds substrate (15) in place, the side panel (14) comprising a bottom contour (16),
- a microbial fuel cell module (1) comprising
    - a housing (7) comprising

        a continuous side wall (8) with an upper rim (18) and a bottom rim (17) forming a closed perimeter provided with at least two vents (11) for air flow, the upper rim (18) being attached to the bottom contour (16), and
        a base (9) attached to the bottom rim (17) of the side wall (8),

    - a plate (2) with at least one opening and fixed to the side wall (8) above the base (9) and below the upper rim (18),
    - at least one planar microbial fuel cell (3) comprising a stack of:

an inoculated electroactive flat anode (4) covered by a biofilm capable of degrading organic matter in contact with substrate (15) and generating an electron flow,
a flat ionic exchange membrane (5) placed below the anode (4) and
a flat air-cathode (6) placed below the ionic exchange membrane (5) and loaded with a catalyst performing an oxygen reduction reaction, the planar microbial fuel cell (3) being attached to the opening fully covering the opening with the air-cathode (6) facing towards the base in contact with air.

**2.** The green container microbial fuel cell module (100) of claim 1, wherein the inoculated anode (4) and air-cathode (6) are carbon-based materials and are covered in a stainless-steel mesh that increases the electrical conductivity of the inoculated anode (4) and of the air-cathode (6) and provides an electrical connection to an external electrical circuit that collects electrical energy generated by the green container microbial fuel cell module (100).

**3.** The green container microbial fuel cell module (100) of claim 1, wherein the inoculated anode (4) and air-cathode (6) are made of carbon fibers of diameters from 100 nm to 10 micrometers forming carbon cloth, carbon paper, carbon paper or carbon foam.

**4.** The green container microbial fuel cell module (100) of claim 1, wherein the catalyst is one among the materials from the group of platinum, ruthenium, iron, cobalt, manganese, the oxides and phosphides of said metals and carbon-based catalysts.

**5.** The green container microbial fuel cell module (100) of claim 4, wherein the carbon-based catalyst is carbon doped with nitrogen or one material from the group of iron, cobalt, nickel, platinum and palladium.

**6.** The green container microbial fuel cell module (100) of claim 1, wherein the housing (7) further comprises

- an impervious roof (19) attached to the upper rim (18) and above the plate (2), and
- a pipe (12) piercing through the side wall (8) between the upper rim (18) and the plate (2) communicating the interior of the housing (7) and the outside.

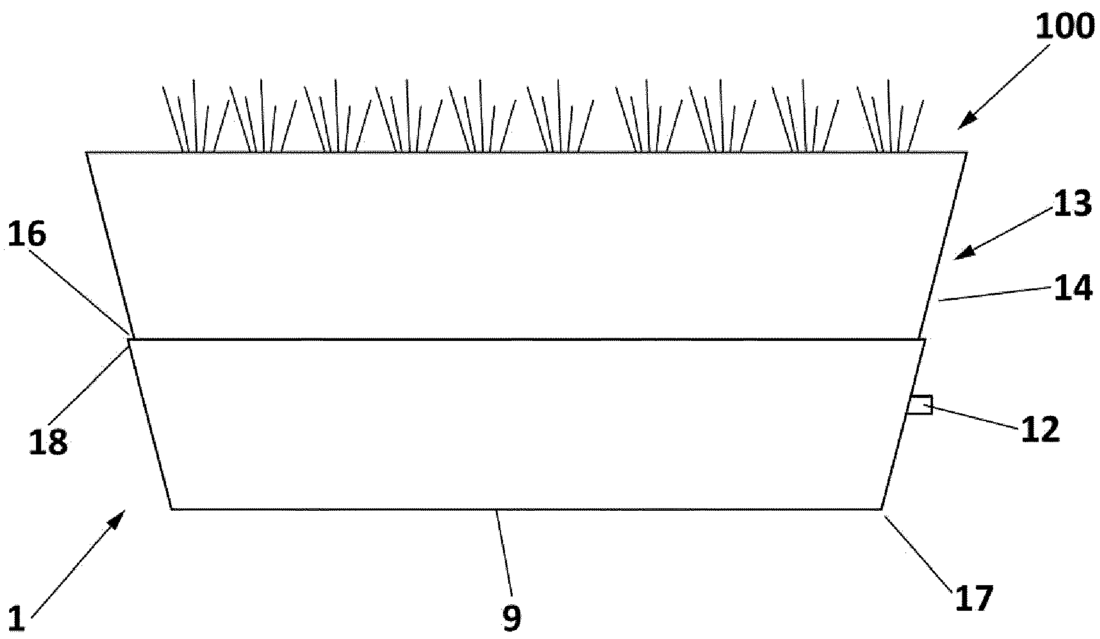


FIG. 1

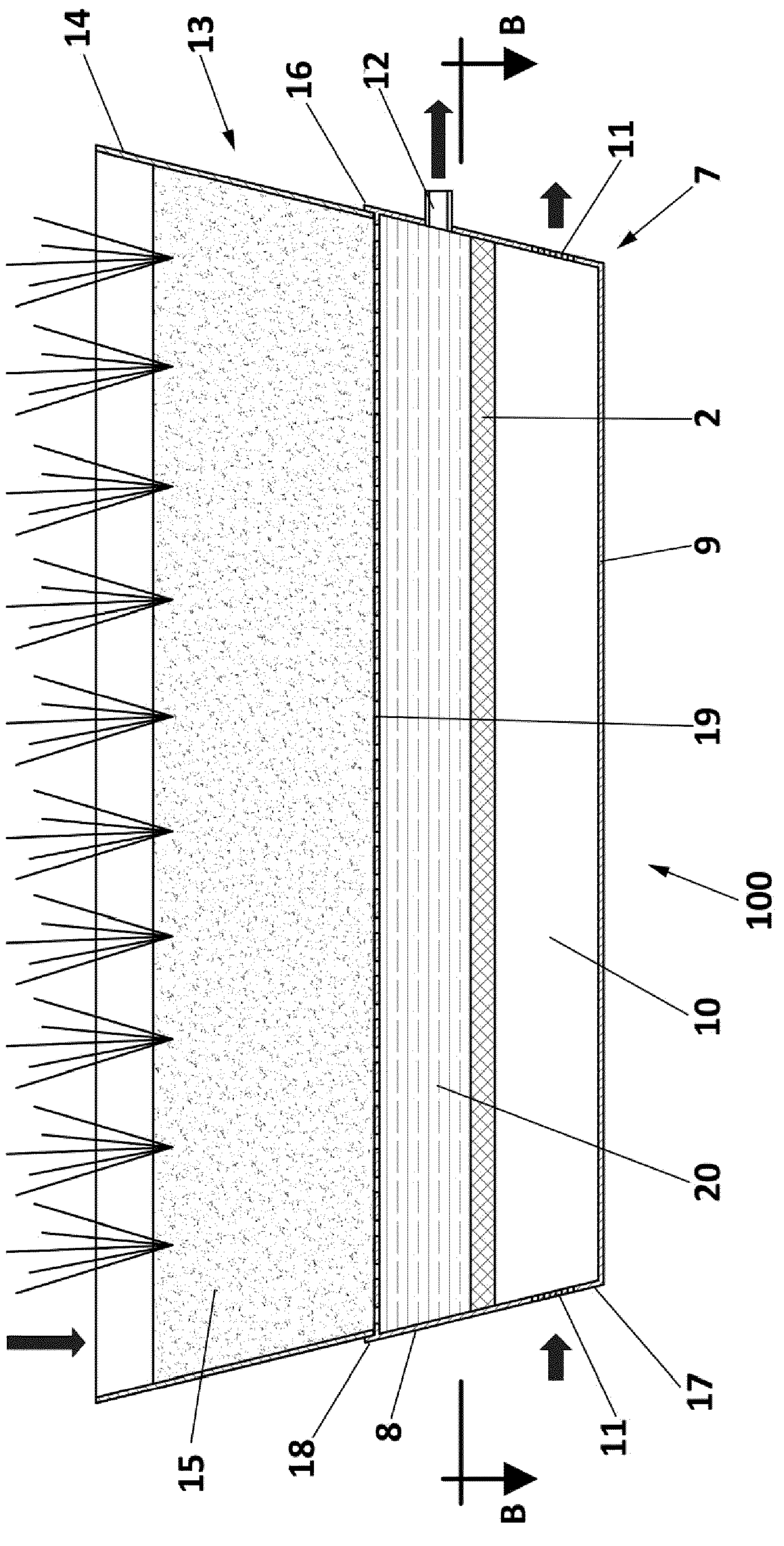


FIG. 2

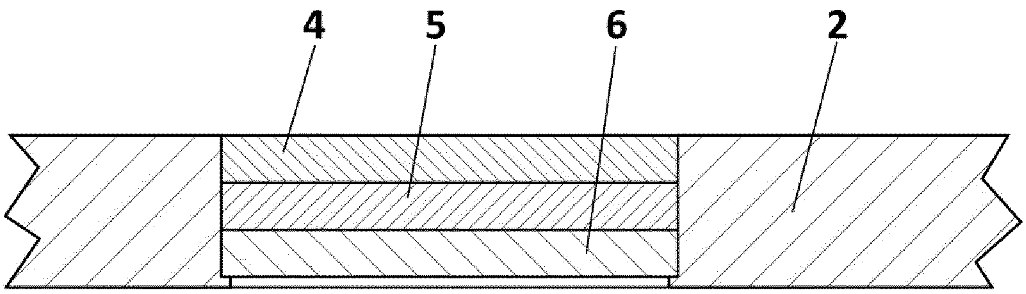


FIG. 3
A-A

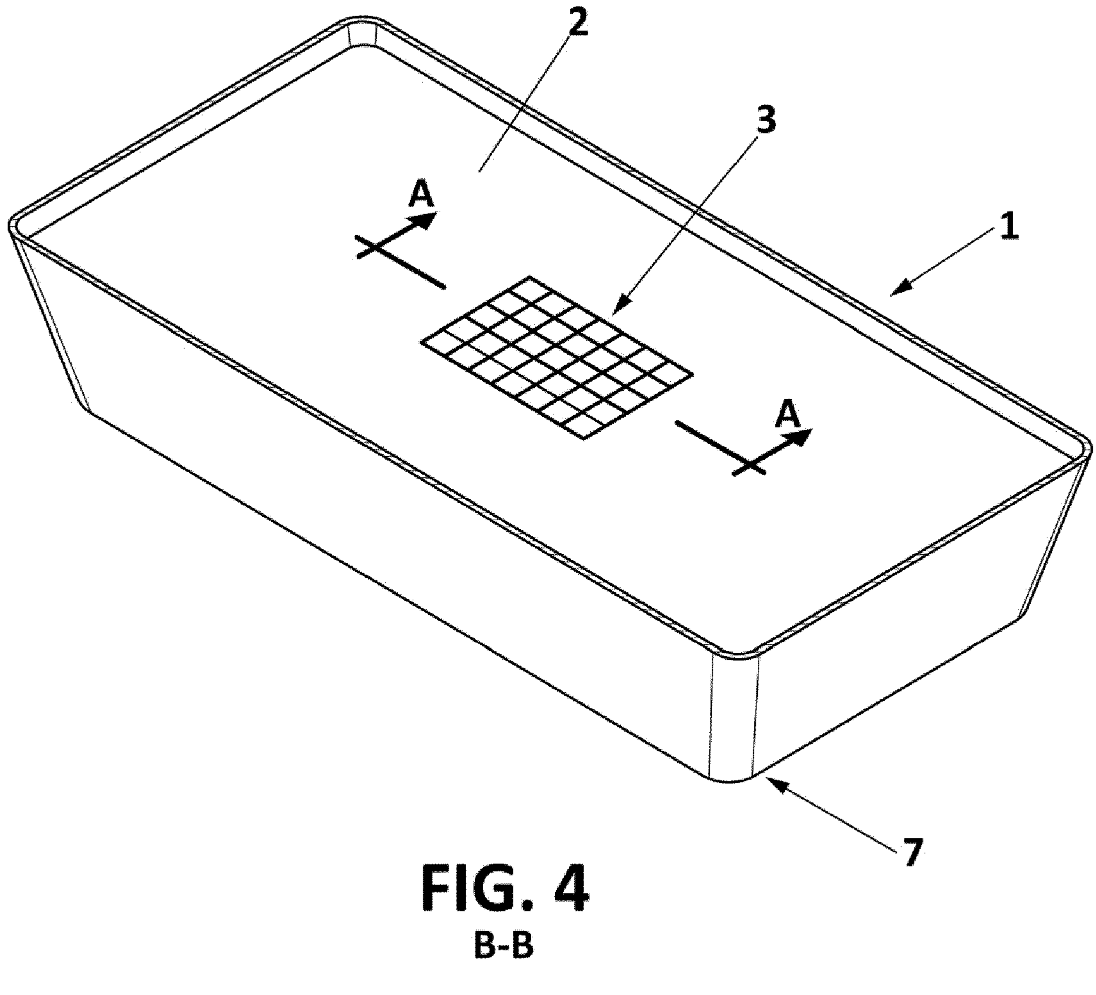


FIG. 4
B-B

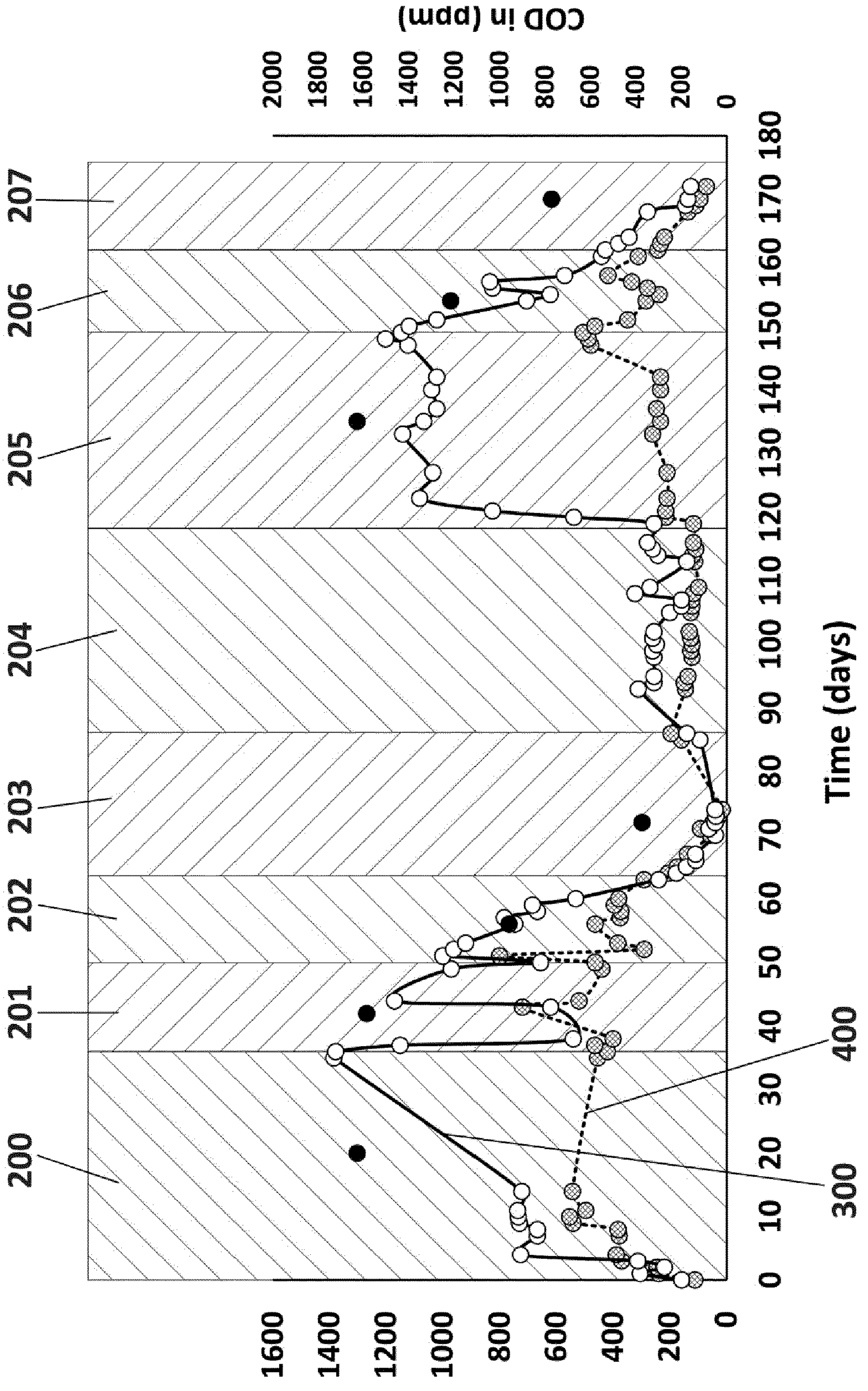
COD in (ppm)
2000
1800
1600
1400
1200
1000
800
600
400
200
0
J (mA/m2)
1600
1400
1200
1000
800
600
400
200
0
Time (days)
0
10
20
30
40
50
60
70
80
90
100
110
120
130
140
150
160
170
180
200
201
202
203
204
205
206
207
300
400

FIG. 5

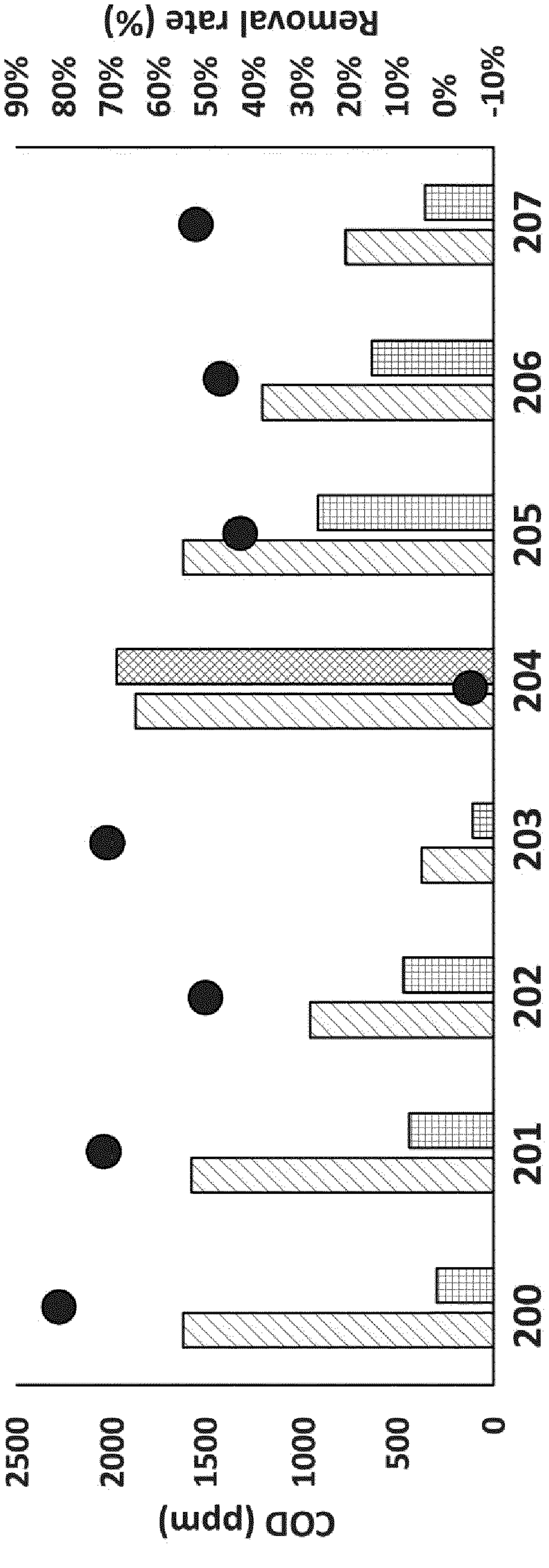
Removal rate (%)
90%
80%
70%
60%
50%
40%
30%
20%
10%
0%
-10%
COD (ppm)
2500
2000
1500
1000
500
0
200
201
202
203
204
205
206
207

FIG. 6

Europäisches Patentamt
European Patent Office
Office européen des brevets

# EUROPEAN SEARCH REPORT

Application Number
EP 23 38 3106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/077541 A1 (TOGO MAKOTO [JP] ET AL) 16 March 2017 (2017-03-16)<br>* paragraphs [0053] - [0063] *<br>* paragraphs [0123] - [0128] *<br>* figures 12-19 *<br>----- | 1-6 | INV.<br>H01M8/16<br>H01M8/2475<br>H01M4/90 |
| Y | US 2018/269511 A1 (TOGO MAKOTO [JP] ET AL) 20 September 2018 (2018-09-20)<br>* paragraphs [0043] - [0106] *<br>* figures 6-15, 22, 25 *<br>----- | 1-6 | |

TECHNICAL FIELDS SEARCHED (IPC)

H01M

The present search report has been drawn up for all claims

2

| Place of search | Date of completion of the search | Examiner |
|---|---|---|
| Munich | 30 April 2024 | Kelly, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 38 3106

This annex lists the patent family members relating to the patent documents cited in the above-mentioned European search report. The members are as contained in the European Patent Office EDP file on
The European Patent Office is in no way liable for these particulars which are merely given for the purpose of information.

30-04-2024

| Patent document cited in search report | Publication date | Patent family member(s) | Publication date |
|---|---|---|---|
| US 2017077541 A1 | 16-03-2017 | US 2017077541 A1 | 16-03-2017 |
| | | WO 2016035440 A1 | 10-03-2016 |
| US 2018269511 A1 | 20-09-2018 | CN 108780910 A | 09-11-2018 |
| | | JP 2017183011 A | 05-10-2017 |
| | | US 2018269511 A1 | 20-09-2018 |
| | | WO 2017168778 A1 | 05-10-2017 |

EPO FORM P0459

For more details about this annex : see Official Journal of the European Patent Office, No. 12/82